# EUROPÄISCHE PATENTSCHRIFT

(11) **EP 3 715 165 B1**
(45) Veröffentlichungstag und Bekanntmachung des Hinweises auf die Patenterteilung: **21.12.2022**
(21) Anmeldenummer: 20161948.3
(22) Anmeldetag: 10.03.2020
(51) Int. Cl.: B60K 35/00, B60K 37/06, G06F 3/041, G06F 3/0484, G06F 3/0488

(54) **VERFAHREN ZUM BETREIBEN EINER BERÜHRUNGSEMPFINDLICHEN BEDIENEINRICHTUNG EINES KRAFTFAHRZEUGS SOWIE KRAFTFAHRZEUG ZUR DURCHFÜHRUNG DES VERFAHRENS**
METHOD FOR OPERATING A CONTACT-SENSITIVE CONTROL DEVICE OF A MOTOR VEHICLE AND MOTOR VEHICLE FOR CARRYING OUT THE METHOD
PROCÉDÉ DE FONCTIONNEMENT D'UN DISPOSITIF DE COMMANDE TACTILE D'UN VÉHICULE AUTOMOBILE AINSI QUE VÉHICULE AUTOMOBILE PERMETTANT DE METTRE EN UVRE LEDIT PROCÉDÉ

(30) Priorität: 27.03.2019 DE 102019204216
(43) Veröffentlichungstag der Anmeldung: 30.09.2020
(73) Patentinhaber: VOLKSWAGEN AG, 38440 Wolfsburg (DE)
(72) Erfinder: Ehmann, Sebastian, 38302 Wolfenbüttel (DE)

(56) Entgegenhaltungen:
- EP-A1- 3 236 340
- US-A1- 2011 082 620
- US-A1- 2014 107 871
- US-A1- 2017 277 353

## Beschreibung

Die Erfindung betrifft ein Verfahren zum Betreiben einer berührungsempfindlichen Bedieneinrichtung eines Kraftfahrzeugs gemäß dem Oberbegriff des Patentanspruchs 1.

Berührungsempfindliche Bedieneinrichtungen in Kraftfahrzeugen, welche beispielsweise in Form eines sogenannten Touchscreens ausgebildet sein können, erfreuen sich zunehmender Beliebtheit. Der Nachteil besteht jedoch darin, dass es in einem fahrenden Kraftfahrzeug mit einer derartigen Bedieneinrichtung teilweise schwierig ist, virtuell erzeugte Bedienelemente (auch Schaltflächen genannt) mit dem Finger zu treffen, also in geeigneter Weise zu betätigen. Dieses Problem ergibt sich insbesondere dann, wenn beispielsweise durch Straßenunebenheiten verursachte Erschütterungen bzw. Beschleunigungen des Kraftfahrzeugs die relative Position von der Hand eines Bedieners einerseits und der berührungsempfindlichen Bedieneinrichtung andererseits schlagartig verändern.

Zur Lösung dieses Problems sind der Anmelderin mehrere Schriften bekannt geworden. So wird in der den Oberbegriff der nebengeordneten Ansprüche bildenden DE 10 2015 209 935 A1 ein Verfahren zur Detektion einer manuellen Bedienhandlung an einer Eingabevorrichtung vorgeschlagen. Bei dem Verfahren wird zunächst eine Störeinwirkung auf einen Bewegungsablauf der manuellen Bedienungshandlung erfasst und anschließend der Bewegungsablauf der manuellen Bedienungshandlung selbst. In Abhängigkeit der erfassten Störeinwirkung und des erfassten Bewegungsablaufs erfolgt eine Prädiktion der Störauswirkung auf den weiteren Bewegungsablauf. Schließlich wird die Eingabevorrichtung in Abhängigkeit von der prädizierten Störauswirkung angesteuert. Dabei wird unter anderem vorgeschlagen, virtuelle Bedienelemente einer grafischen Bedienoberfläche der Eingabevorrichtung in Abhängigkeit von der prädizierten Störauswirkung anzupassen und/oder zu verschieben.

In der DE 10 2011 011 802 A1 ist ein Verfahren mit einer berührungsempfindlichen Bedieneinrichtung beschrieben, bei der ein manueller Bedienvorgang erfasst und während des Bedienvorgangs eine Beschleunigung erfasst wird. Auf Grund der erfassten Beschleunigung erfolgt die Korrektur der erfassten Bedienposition und es wird ein zur korrigierten Bedienposition gehöriges Steuersignal erzeugt.

In der DE 10 2012 005 084 A1 wird eine Eingabevorrichtung für die Steuerung von Geräten in einem Kraftfahrzeug beschrieben. Die Eingabevorrichtung weist berührungsempfindliche Bereiche auf, welche in Richtung einer Beschleunigungsänderung verlagert werden. Es wird zudem vorgeschlagen, eine Vergrößerung der empfindlichen Bereiche in Abhängigkeit der gemessenen Beschleunigung vorzunehmen. Die empfindlichen Bereiche sind also umso größer je stärker die Treffsicherheit des Benutzers vermindert ist.

Schließlich ist der DE 10 2014 019 243 A1 ein Verfahren zum Betreiben einer Bedieneinrichtung eines Kraftfahrzeugs zu entnehmen, bei der eine auf das Kraftfahrzeug wirkende Beschleunigung erfasst wird und ein virtuelles Bedienelement in Abhängigkeit der erfassten Beschleunigung aus einer ersten Lage in eine von der ersten Lage unterschiedliche zweite Lage bewegt wird. Insbesondere wird auch die Bewegung eines Arms eines Bedieners relativ zu der Bedienvorrichtung erfasst.

Die die Merkmale vom Oberbegriff des Anspruchs 1 aufweisende US 2011 / 0 082 620 A1 beschreibt ein Verfahren zum Konfigurieren einer grafischen Benutzerschnittstelle eines Kraftfahrzeugs in Form eines Touchscreens, welcher über eine Steuereinrichtung ansteuerbar ist. Die Steuereinrichtung ist mit einer Vielzahl von Sensoren signaltechnisch verbunden. Über die Sensoren können Fahrbedingungen des Kraftfahrzeugs (bspw. Erschütterungen bzw. Beschleunigungen) erfasst werden, in deren Abgängigkeit die Steuereinrichtung dann den Touchscreen ansteuert. Konkret werden bei sich verschlechternden Fahrbedingungen und damit erschwerter Bedienung des Touchscreens um die virtuellen Bedienelemente erweiterte, berührungsempfindliche Zonen. Es wird auch erwähnt, dass zusätzlich eine notwendige Verweildauer bei sich verschlechternden Fahrbedingungen verlängert werden kann.

Aus der US 2017 / 0 277 353 A1 ist ein Verfahren zur Bedienung einer Bedieneinrichtung eines Kraftfahrzeugs mit einer berührungsempfindlichen Steuereinheit, einer Erfassungseinrichtung und einer Steuereinrichtung bekannt. Bei dem Verfahren wird erfasst, an welcher Position die berührungsempfindliche Steuereinheit durch ein Bedienwerkzeug berührt wird. Über die Erfassungseinrichtung kann ein Druck erfasst werden, den das Bedienwerkzeug auf die berührungsempfindliche Steuereinheit ausübt. Über die Steuereinrichtung kann ferner ein Druck-Grenzwert festgelegt werden, der zur Auslösung einer Funktion erforderlich ist. Der Druck-Grenzwert wird in Abhängigkeit einer über einen Sensor gemessenen Geschwindigkeit und/oder Beschleunigung des Kraftfahrzeugs festgelegt.

Der vorliegenden Erfindung liegt die Aufgabe zu Grunde, ein Verfahren zum Betreiben einer berührungsempfindlichen Bedieneinrichtung eines Kraftfahrzeugs bereitzustellen, welches zu einer weiteren Erhöhung der Eingabesicherheit eines Bedieners bei einem fahrenden Kraftfahrzeug beiträgt.

Vorliegende Aufgaben werden durch ein Verfahren mit den Merkmalen von Patentanspruch 1 und durch ein Kraftfahrzeug mit den Merkmalen von Anspruch 11 gelöst.

Vorteilhafte Ausbildungen beziehungsweise Weiterbildungen des Verfahrens sind den abhängigen Ansprüchen entnehmbar.

Die Erfindung geht zunächst aus von einem Verfahren zum Betreiben einer berührungsempfindlichen Bedieneinrichtung eines Kraftfahrzeugs. Die Bedieneinrichtung stellt wenigstens ein virtuelles Bedienelement bereit. Dies kann beispielsweise als Schaltfläche ausgebildet sein. Dem virtuellen Bedienelement ist wenigstens eine bestimmte, auslösbare Funktion zugeordnet. Im Normalfall wird bei Betätigung (Berührung) des virtuellen Bedienelementes also eine Funktion ausgelöst. Die Funktion kann beispielsweise in der Veränderung der grafischen Bedienoberfläche der Bedieneinrichtung selbst (beispielsweise Erzeugen einer Listendarstellung) oder auch in der Ansteuerung eines bestimmten Gerätes (Radio, Klimaanlage, etc.) im Kraftfahrzeug liegen.

Es wird bei dem Verfahren ferner zumindest eine auf das Kraftfahrzeug und/oder die Bedieneinrichtung wirkende Beschleunigung in zumindest einer Raumrichtung erfasst. In Abhängigkeit der erfassten Beschleunigung wird ein dem Bedienelement zugeordneter, berührungsempfindlicher Erfassungsbereich in seiner Position relativ zur Bedieneinrichtung, in seiner Ausrichtung relativ zur Bedieneinrichtung, in seiner Form und/oder in seiner Größe verändert.

Es wird ferner vorgeschlagen, dass zusätzlich wenigstens ein Betätigungsparameter für den dem Bedienelement zugeordneten Erfassungsbereich zur Auslösung der wenigstens einen Funktion in Abhängigkeit der erfassten Beschleunigung in seinem Wert verändert wird.

Durch diese Merkmale wird die Grundvoraussetzung dafür geschaffen, dass eine noch situationsgerechtere Bedienung der berührungsempfindlichen Bedieneinrichtung während der Fahrt des Kraftfahrzeugs ermöglicht wird. Dies führt zu einer Verminderung von erschütterungs- beziehungsweise beschleunigungsbedingten Fehleingaben eines Benutzers.

Als Weiterbildung ist es beispielsweise denkbar, dass als Betätigungsparameter eine notwendige Verweildauer eines menschlichen Betätigungswerkzeuges auf dem dem Bedienelement zugeordneten Erfassungsbereich angepasst wird. Durch Erschütterungen während der Fahrt kann eine gewollte Verweildauer eines menschlichen Betätigungswerkzeuges spürbar beeinflusst werden. Daher bietet eine derartige Weiterbildung des Verfahrens einen sehr guten Ansatzpunkt zur Optimierung des Verfahrens.

Insbesondere ist es in diesem Zusammenhang vorteilhaft, wenn die notwendige Verweildauer mit einem steigenden Wert der erfassten Beschleunigung verlängert wird. Bei Einhaltung der notwendigen, verlängerten Verweildauer auf dem virtuellen Bedienelement kann man daher trotz Erschütterungen sicher sein, dass eine Betätigung und Auslösung einer zugeordneten Funktion auch wirklich gewollt waren.

Gemäß einer anderen vorteilhaften Ausbildung des Erfindungsgedankens ist alternativ oder zusätzlich auch denkbar, dass als Betätigungsparameter eine notwendige Betätigungskraft bzw. eine Berührstärke/ein Berührdruck eines menschlichen Betätigungswerkzeuges für den dem Bedienelement zugeordneten Erfassungsbereich angepasst wird. Auch dieser Betätigungsparameter kann entscheidend durch Auftreten der Erschütterungen des Kraftfahrzeugs beeinflusst werden und bietet daher ebenfalls einen guten Ansatzpunkt zur Optimierung des Verfahrens.

In diesem Zusammenhang ist es vorstellbar, die notwendige Betätigungskraft eines menschlichen Betätigungswerkzeuges für den dem Bedienelement zugeordneten Erfassungsbereich mit einem steigenden Wert der erfassten Beschleunigung zu vergrößern. Erreicht die Betätigungskraft bei einer vorliegenden Erschütterung einen notwendigen Schwellenwert, so ist demnach mit einer willentlichen Betätigung des virtuellen Bedienelementes auszugehen.

Als Merkmal der Erfindung wird vorgeschlagen, dass die notwendige Verweildauer und/oder die notwendige Betätigungskraft zusätzlich in Abhängigkeit der Anzahl an virtuellen Bedienelementen verändert werden.

Diesem Vorschlag liegt die Erkenntnis zu Grunde, dass es bei Erschütterungen eines Kraftfahrzeugs für einen Bediener mit zunehmender Anzahl von virtuellen Bedienelementen auf einer grafischen Bedienoberfläche zunehmend schwieriger wird, das gewollte, richtige Bedienelement zu treffen.

Daher wird gemäß einer weiteren Ausbildung des Erfindungsgedankens vorgeschlagen, die notwendige Verweildauer mit zunehmender Anzahl an virtuellen Bedienelementen zu verlängern und/oder die notwendige Betätigungskraft mit zunehmender Anzahl an virtuellen Bedienelementen zu vergrößern.

Es kann jedoch auch der Fall eintreten, dass eine Erschütterung so groß ist, dass eine gewollte Bedienung eines Fahrzeuginsassen auch bei ordnungsgemäßer Berührung eines virtuellen Bedienelementes mit großer Wahrscheinlichkeit auszuschließen ist. Um diesem Umstand Rechnung zu tragen, wird vorgeschlagen, dass bei Erreichen oder Überschreiten eines bestimmten oder bestimmbaren Schwellenwertes der erfassten Beschleunigung trotz einer ordnungsgemäßen Betätigung des Bedienelementes keine Funktion ausgelöst wird. Es wird also auch dann keine Funktion ausgelöst, wenn das Bedienelement mit einer ausreichenden Verweildauer und mit einer ausreichenden Betätigungskraft berührt wurde.

Schließlich soll auch der Fall in Betracht gezogen werden, dass durch eine Vielzahl an virtuellen Bedienelementen eine Bildschirmtastatur auf der berührungsempfindlichen Bedieneinrichtung ausgebildet wird. In diesem Fall ist es sehr zweckmäßig, wenn bei Eingabe von alphanumerischen Zeichen mittels der Bedienelemente vor einer Veränderung eines einem der Bedienelemente zugeordneten Erfassungsbereichs in seiner Position relativ zur Bedieneinrichtung, in seiner Ausrichtung relativ zur Bedieneinrichtung, in seiner Form und/oder in seiner Größe eine Wahrscheinlichkeit berücksichtigt wird, mit der ein solches Bedienelement (also ein alphanumerisches Zeichen) als Nächstes voraussichtlich betätigt werden soll. Die Wahrscheinlichkeit kann beispielsweise durch eine bestimmte Rechen- oder Entscheidungslogik bestimmt werden, welche in einer die Bedieneinrichtung ansteuernde Steuereinrichtung hinterlegt ist.

Es kann auch ein Kraftfahrzeug zur Durchführung des erfindungsgemäßen Verfahrens bereitgestellt werden. Ein solches Kraftfahrzeug weist wenigstens eine berührungsempfindliche Bedieneinrichtung zur Bereitstellung einer grafischen Benutzerschnittstelle auf. Über die grafische Benutzerschnittstelle ist wenigstens ein virtuelles Bedienelement bereitstellbar, bei dessen Betätigung eine bestimmte Funktion auslösbar ist. Es ist ferner wenigstens eine Erfassungseinrichtung zur Erfassung einer Beschleunigung eines Kraftfahrzeugs und/oder der Bedieneinrichtung in wenigstens einer Raumrichtung vorhanden. Die Erfassungseinrichtung kann beispielsweise durch einen Beschleunigungssensor ausgebildet sein.

Durch wenigstens eine Steuereinrichtung ist die Bedieneinrichtung derart ansteuerbar, dass ein dem Bedienelement zugeordneter, berührungsempfindlicher Erfassungsbereich in Abhängigkeit der erfassten Beschleunigung in seiner Position relativ zur Bedieneinrichtung, in seiner Ausrichtung relativ zur Bedieneinrichtung, in seiner Form und/oder in seiner Größe verändert wird.

Das Kraftfahrzeug zeichnet sich dadurch aus, dass wenigstens eine Erfassungseinrichtung vorhanden ist, mit der wenigstens ein Betätigungsparameter für den dem Bedienelement zugeordneten Erfassungsbereich zur Auslösung der wenigstens einen Funktion erfasst werden kann. Durch die Erfassungseinrichtung kann als Betätigungsparameter beispielsweise eine Verweildauer eines Betätigungswerkzeugs auf dem Erfassungsbereich des Bedienelementes und/oder eine Betätigungskraft, mit der der Erfassungsbereich des virtuellen Bedienelementes berührt wird, erfasst werden. Durch die Steuereinrichtung ist die Bedieneinrichtung derart ansteuerbar, dass sich wenigstens ein Betätigungsparameter für das eine Bedienelement zur Auslösung der wenigstens einen Funktion in Abhängigkeit der erfassten Beschleunigung verändert.

So kann beispielsweise die Steuereinrichtung die Bedieneinrichtung bei Erfassen einer Beschleunigung derart ansteuern, dass die notwendige Verweildauer eines Betätigungswerkzeugs auf dem dem virtuellen Bedienelement zugeordneten Erfassungsbereich und/oder die notwendige Betätigungskraft bei Betätigung des virtuellen Bedienelementes durch ein Betätigungswerkzeug, welches zur Auslösung einer gewünschten Funktion notwendig ist, erhöht wird.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine berührungsempfindliche Bedieneinrichtung im Innenraum eines Kraftfahrzeugs,
- Fig. 2: ein Flussdiagramm zur Erläuterung des Verfahrens,
- Figuren 3: die Darstellung von denkbaren Anpassungen von berührungsempfindlichen Erfassungsbereichen virtueller Bedienelemente,
- Figuren 4: eine weitere Darstellung möglicher Anpassungen von berührungsempfindlichen Erfassungsbereichen,
- Fig. 5: ein Diagramm zur Darstellung der notwendigen Betätigungskraft für einen Erfassungsbereich eines virtuellen Bedienelementes in Abhängigkeit der erfassten Beschleunigung,
- Fig. 6: ein Diagramm zur Darstellung der notwendigen Verweildauer eines Bedienwerkzeugs auf einem Erfassungsbereich eines virtuellen Bedienelement in Abhängigkeit der erfassten Beschleunigung und
- Fig. 7: ein Kraftfahrzeug, welches zur Durchführung des erfindungsgemäßen Verfahrens hergerichtet ist.

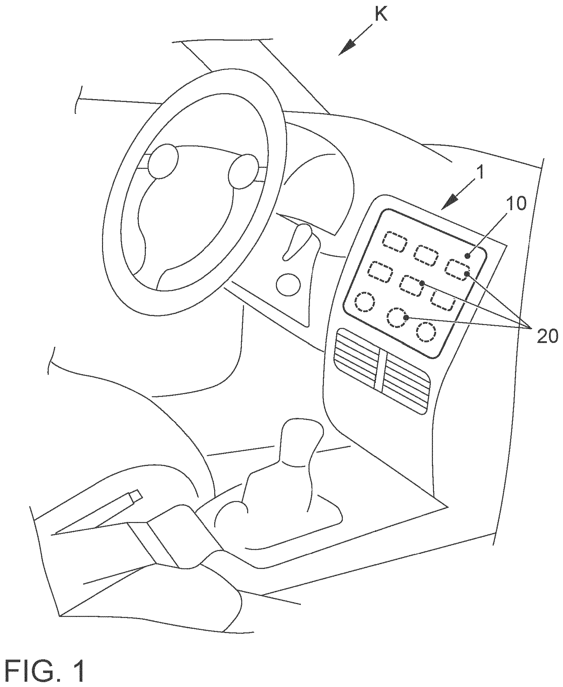

In der Fig. 1 ist ein Kraftfahrzeug K im Cockpitbereich seines Innenraums ersichtlich. Im Bereich seiner nicht näher bezifferten Mittelkonsole weist das Kraftfahrzeug K eine berührungsempfindliche Bedieneinrichtung 1 auf. Die Bedieneinrichtung 1 ist als sogenannter Touchscreen ausgebildet, mit einer berührungsempfindlichen Bedienfläche 10.

Auf der Bedienfläche 10 sind mehrere virtuelle Bedienelemente 20 dargestellt. Die virtuellen Bedienelemente 20 können unterschiedliche Form und Ausprägung aufweisen. Sie können beispielsweise Bestandteil eines Bedienmenüs sein, bei deren Betätigung weitere Untermenüs mit entsprechend neuen virtuellen Bedienelementen geöffnet werden.

Durch ein virtuelles Bedienelement 20 kann bei Berührung jedoch auch unmittelbar eine Komponente des Kraftfahrzeugs K, wie beispielsweise eine Klimaanlage, ein Radio, ein Telefon, etc. angesteuert werden.

Sowohl das Wechseln in eine neue Darstellung auf der berührungsempfindlichen Bedienfläche 10 als auch die unmittelbare Ansteuerung einer Fahrzeugkomponente bei Berührung eines den virtuellen Bedienelementen 20 zugeordneten Erfassungsbereichs kann als Funktion im Sinne der Erfindung betrachtet werden. Die Aufzählung ist nicht abschließend.

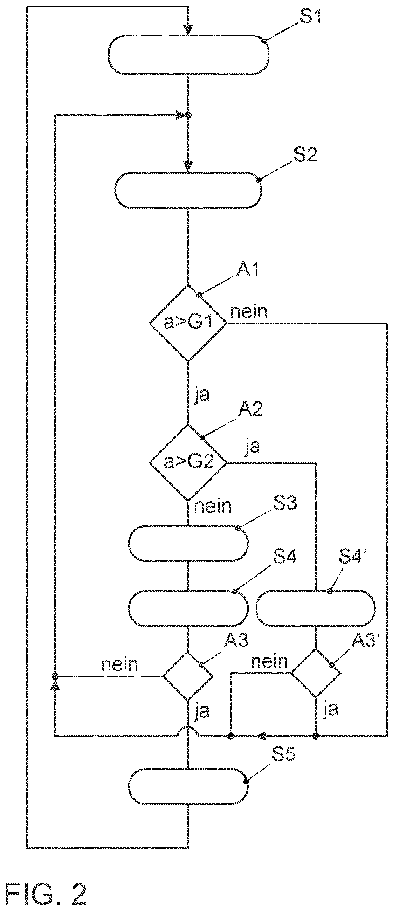

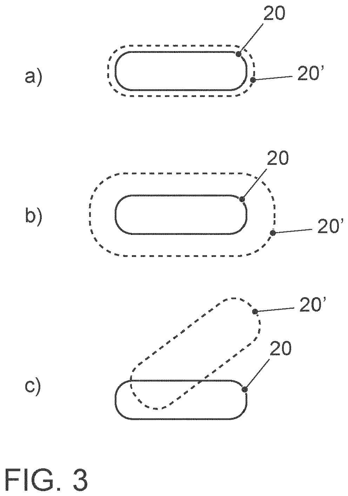

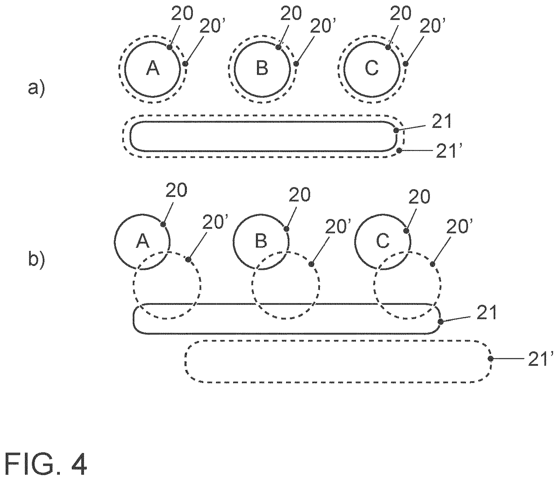

In Fig. 2 ist ein Ablaufdiagramm dargestellt, welches das erfindungsgemäße Verfahren zum Betreiben der berührungsempfindlichen Bedieneinrichtung 1 näher erläutern soll. So wird in einem Verfahrensschritt S1 zunächst zumindest ein berührungsempfindliches Bedienelement 20 auf der berührungsempfindlichen Bedienfläche 10 dargestellt. Jedem auf der berührungsempfindlichen Bedienfläche 10 dargestellten, virtuellen Bedienelement 20 ist ein berührungsempfindlicher Erfassungsbereich 20' zugeordnet, bei dessen Berührung durch ein menschliches Bedienwerkzeug (nicht dargestellt) eine gewünschte Funktion durchgeführt wird (vergleiche auch Fig. 3 und 4).

In einem Verfahrensschritt S2 wird durch geeignete Erfassungsmittel (beispielsweise Sensoren) eine Beschleunigung a des Kraftfahrzeugs K in wenigstens einer Raumrichtung erfasst.

Über eine Abfrage A1 wird abgefragt, ob die erfasste Beschleunigung a größer als ein erster Schwellenwert G1 ist. Falls dies nicht zutrifft, so war die erfasste Beschleunigung a gleich null oder vernachlässigbar klein und wirkt sich nicht nachteilhaft auf die Bedienung der berührungsempfindlichen Bedieneinrichtung 1 durch einen Fahrzeuginsassen aus. Eine Veränderung des dem virtuellen Bedienelement zugeordneten Erfassungsbereiches und dessen Betätigungsparameter ist daher nicht erforderlich.

Ist die erfasste Beschleunigung a jedoch größer als der erste Schwellenwert G1, so wird in einer Abfrage A2 abgefragt, ob die erfasste Beschleunigung a auch einen zweiten Schwellenwert G2 übertrifft, welcher größer ist als der erste Schwellenwert G1. Der zweite Schwellenwert G2 stellt dabei einen Schwellenwert dar, bei dem davon ausgegangen wird, dass eine gewollte Berührung eines virtuellen Bedienelementes durch einen Fahrzeuginsassen nicht mehr zuverlässig erfassbar ist.

Ist die erfasste Beschleunigung a nicht größer als der besagte Schwellenwert G2, so erfolgt in einem Verfahrensschritt S3 eine Veränderung des wenigstens einen virtuellen Bedienelementes in Abhängigkeit der erfassten Beschleunigung a. Die Veränderung des Bedienelementes kann dabei insbesondere in seiner Position relativ zur Bedieneinrichtung, in seiner Ausrichtung relativ zur Bedieneinrichtung, in seiner Form und/oder in seiner Größe erfolgen (vergleiche auch Fig. 3 und 4).

Zusätzlich erfolgt eine Veränderung wenigstens eines Betätigungsparameters für den dem Bedienelement zugeordneten Erfassungsbereich zur Auslösung einer Funktion in Abhängigkeit der erfassten Beschleunigung.

Als Betätigungsparameter werden insbesondere eine notwendige Verweildauer eines menschlichen Betätigungswerkzeuges auf dem Erfassungsbereich des Bedienelementes und/oder eine notwendige Betätigungskraft beziehungsweise eine Berührstärke oder ein Berührdruck eines menschlichen Betätigungswerkzeuges für den Erfassungsbereich des Bedienelement angepasst.

In einem Verfahrensschritt S4 wird dann gegebenenfalls eine von einem Bediener durchgeführte Berührung des Erfassungsbereichs des virtuellen Bedienelementes 20 mit geeigneten Mitteln (beispielsweise Sensor) erfasst und es wird in einer Abfrage A3 abgefragt, ob die Betätigung des Bedienelementes 20 durch den Bediener ordnungsgemäß war oder nicht.

Unter ordnungsgemäßer Betätigung im Sinne der Erfindung soll verstanden werden, dass die Berührung des Bedienelementes 20 bzw. seines Erfassungsbereichs mit einer notwendigen Verweildauer auf dem Bedienelement und mit einer notwendigen Betätigungskraft erfolgte.

Bei ordnungsgemäßer Betätigung des Bedienelementes wird in einem Verfahrensschritt S5 folgerichtig die gewünschte Funktion ausgelöst. Wird hingegen eine ordnungsgemäße Betätigung des Bedienelementes verneint, so erfolgt keine Auslösung einer gewünschten Funktion.

Wurde in der Abfrage A2 festgestellt, dass die erfasste Beschleunigung a den zweiten Schwellenwert G2 übertrifft, so erfolgt in einem Verfahrensschritt S4' zwar gegebenenfalls auch die Erfassung einer Berührung durch einen Bediener, dies führt jedoch nicht zur Auslösung einer gewünschten Funktion, selbst wenn in einer Abfrage A3' eine ordnungsgemäße Betätigung des Bedienelementes bejaht werden kann.

Die Fig. 3 zeigt, dass jedem virtuellen Bedienelement 20 auf der Bedienfläche 10 ein berührungsempfindlicher beziehungsweise sensitiver Erfassungsbereich 20' zugeordnet ist. Die Berührung eines berührungsempfindlichen Erfassungsbereiches 20' eines Bedienelementes 20 wird also der Bedienung eines virtuellen Bedienelementes 20 zugeordnet.

Im Normalfall, also bei einer zu vernachlässigenden Fahrzeugbeschleunigung, erfolgt keine Veränderung des Erfassungsbereiches 20' relativ zum virtuellen Bedienelement 20 oder relativ zur Bedieneinrichtung 1. Die Größe oder der Umriss eines Erfassungsbereiches 20' stimmen daher in etwa mit der Größe oder dem Umriss eines virtuellen Bedienelementes 20 überein (Fig. 3a).

Erfolgt hingegen die Erfassung einer nennenswerten Beschleunigung, so kann beispielsweise die Vergrößerung des Erfassungsbereiches 20' erfolgen (Fig. 3b).

Es ist alternativ oder zusätzlich auch denkbar, dass bei Erfassung einer nennenswerten Beschleunigung der Erfassungsbereich 20' in seiner Position und/oder Ausrichtung relativ zum Bedienelement 20 oder relativ zur Bedieneinrichtung 1 verändert wird (Fig. 3c).

Es wird also der einem Bedienelement zugeordnete Erfassungsbereich vorzugsweise unabhängig von der grafischen Erscheinung des Bedienelementes selbst verändert.

Durch derartige Veränderungen des Erfassungsbereiches 20' eines Bedienelementes 20 kann einer Berührung an "falscher" Position, die durch eine Beschleunigung, d. h. eine kurzfristige Translation oder Rotation des Kraftfahrzeugs zustande kommt, dennoch die "richtige" Position, also das "richtigen" Bedienelement 20 zugeordnet werden.

Unter Umständen ist es auch denkbar, eine relative Position einer Hand zur berührungsempfindlichen Bedieneinrichtung 1 zu bestimmen. In einem solchen Fall kann dies in die Anpassung eines Erfassungsbereichs 20' miteinbezogen werden. Falls nämlich die Bewegung des Kraftfahrzeugs K durch den Bediener bereits ausgeglichen wurde, muss der Erfassungsbereich 20' nicht angepasst werden. Auch ist es denkbar, bei einer erfassten Position einer Hand relativ zur Bedieneinrichtung 1 vor Beginn einer Bewegung des Kraftfahrzeugs K, abzuschätzen, welches Bedienelement 20 ursprünglich erreicht werden sollte.

In Fig. 4 ist eine praktische Anwendung ersichtlich. So werden auf der Bedienfläche 10 der berührungsempfindlichen Bedieneinrichtung 1 drei virtuelle Bedienelemente 20 dargestellt, die der Auswahl von Radiosendern A, B oder C entsprechen. Unterhalb der Bedienelemente 20 ist ein längliches Bedienelement 21 dargestellt, welches zur manuellen Regelung der Radiofrequenz dient. Den Bedienelementen 20 beziehungsweise 21 sind die Erfassungsbereiche 20' beziehungsweise 21' zugeordnet. Im Normalfall, also ohne eine erfasste, nennenswerte Beschleunigung des Kraftfahrzeugs K stimmen die grafischen Ausdehnungen der Bedienelemente 20, 21 mit den Ausdehnungen der Erfassungsbereiche 20', 21' in etwa überein.

Bewegt sich das Kraftfahrzeug K durch eine Unebenheit beispielsweise ruckartig nach oben, so erfolgt eine entsprechende Anpassung der Erfassungsbereiche 20', 21'. Konkret werden die Erfassungsbereiche 20', 21' entgegen der Auslenkung des Kraftfahrzeugs K nach unten bewegt, so dass die Gefahr einer durch die Beschleunigung des Kraftfahrzeugs K verursachten Fehlbedienung entgegengewirkt werden kann.

Wollte ein Bediener beispielsweise ursprünglich den Radiosender B einstellen, so entspricht die Berührung, die auf der grafischen Seite dem Bedienelement 21 entsprach, steuerungstechnisch somit einer Berührung des Erfassungsbereiches 20' und wird daher nach wie vor einer Berührung des Bedienelementes 20 zugeordnet.

Wesentlich ist, dass zusätzlich zur Anpassung der Erfassungsbereiche 20', 21' auch noch eine Veränderung der Betätigungsparameter zur Auslösung einer gewünschten Funktion in bereits beschriebener Weise erfolgt.

Die Veränderung der Betätigungsparameter kann beispielsweise derart erfolgen, dass eine notwendige Betätigungskraft F_{B} zur Bedienung eines virtuellen Bedienelementes 20 in Abhängigkeit einer gemessenen Beschleunigung a vergrößert.

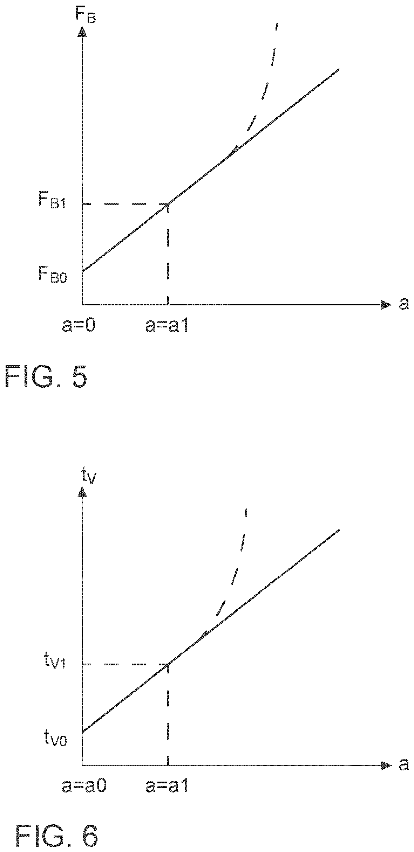

So zeigt Fig. 5, dass bei einer Beschleunigung a = 0 zur Bedienung eines virtuellen Bedienelementes eine Betätigungskraft F_{B} = F_{B0} notwendig ist. Bei einer erfassten Beschleunigung a = a1 hingegen ist bereits eine größere Betätigungskraft F_{B} = F_{B1} erforderlich. Der Zusammenhang zwischen Beschleunigung a und erforderlicher Betätigungskraft F_{B} ist idealtypisch linear dargestellt, kann jedoch mit steigender Beschleunigung a auch exponentiell ansteigen (gestrichelte Linie).

Die Fig. 6 zeigt den Zusammenhang zwischen einer erforderlichen Verweildauer tv auf einem virtuellen Bedienelement beziehungsweise auf einem Erfassungsbereich in Abhängigkeit einer erfassten Beschleunigung a. So wird im Normalfall, bei Nichtvorliegen einer nennenswerten Beschleunigung (a = a0) eine Verweilzeit von tv = tvo eingestellt. Bei einer erfassten Beschleunigung a = a1 wird eine gegenüber der Verweilzeit tvo vergrößerte Verweilzeit tv = t_{V1} eingestellt.

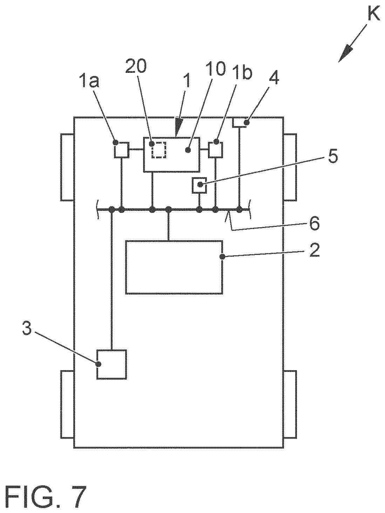

Schließlich ist anhand von Fig. 7 ein Signalflussplan des Kraftfahrzeugs K dargestellt. Es ist ersichtlich, dass das Kraftfahrzeug K über eine Erfassungseinrichtung 4 zur Erfassung einer Beschleunigung des Kraftfahrzeugs K verfügt. Die Erfassungseinrichtung 4 kann als Beschleunigungssensor ausgebildet sein, welcher Beschleunigungen in allen drei Raumrichtungen des Kraftfahrzeugs K und auch Rotationsbeschleunigungen des Kraftfahrzeugs K erfassen kann. Zusätzlich oder alternativ ist auch denkbar, dass ein derartiger Beschleunigungssensor in der berührungsempfindlichen Bedieneinrichtung 1 selbst verbaut ist.

Des Weiteren sind Erfassungseinrichtungen 1a (Kraftsensorik) und 1b (Zeitgeber) vorhanden, mit denen die Erfassung einer Betätigungskraft F_{B} und die Erfassung einer Verweildauer tv auf der berührungsempfindlichen Bedienfläche 10 erfassbar sind.

Wird beispielsweise ein virtuelles Bedienelement 20 auf der Bedienfläche 10 mit einem Finger berührt, so werden durch die Erfassungseinrichtungen 1a, 1b die Betätigungskraft F_{B} und die Verweildauer tv des Bedienwerkzeugs gemessen. Die Messdaten werden über ein Bussystem 6, welches beispielsweise als CAN-Bus ausgebildet sein kann, an eine Steuereinrichtung 2 zur Auswertung übergeben. Bei ordnungsgemäßer Betätigung des Bedienelementes 20 erfolgt dann beispielsweise die Ansteuerung einer Komponente eines Infotainmentsystems 3.

Zusätzlich ist der Einsatz einer als Kamera ausgebildeten Erfassungseinrichtung 5 denkbar. Mit Hilfe dieser Erfassungseinrichtung 5 kann die relative Position einer Hand eines Bedieners (nicht dargestellt) erfasst und bei einer notwendigen, beschleunigungsbedingten Veränderung der Erfassungsbereiche 20' beziehungsweise 21' (hinsichtlich Position, Ausrichtung, Größe) miteinbezogen werden.

### Bezugszeichenliste

- 1: berührungsempfindliche Bedieneinrichtung
- 1a: Erfassungseinrichtung (Kraftsensorik)
- 1b: Erfassungseinrichtung (Zeitgeber)
- 2: Steuereinrichtung
- 3: Infotainmentsystem
- 4: Erfassungseinrichtung (Beschleunigungssensor)
- 5: Erfassungseinrichtung (Kamera)
- 6: Bussystem
- 10: berührungsempfindliche Bedienfläche
- 20: virtuelle Bedienelemente
- 20': Erfassungsbereiche
- 21: virtuelles Bedienelement
- 21': Erfassungsbereich

- A, B, C: Radiosender
- A1-A3, A3': Abfragen
- a: Beschleunigung
- a1: Beschleunigung
- F_{B}: Betätigungskraft
- F_{B0}: Betätigungskraft
- F_{B1}: Betätigungskraft
- G1, G2: Schwellenwerte der Beschleunigung
- K: Kraftfahrzeug
- S1-S4, S4': Verfahrensschritte
- t_{V}: Verweildauer
- t_{V0}: Verweildauer
- t_{V1}: Verweildauer

## Patentansprüche

1. Verfahren zum Betreiben einer berührungsempfindlichen Bedieneinrichtung (1) eines Kraftfahrzeugs (K), wobei die Bedieneinrichtung (1) wenigstens ein virtuelles Bedienelement (20, 21) bereitstellt, dem wenigstens eine bestimmte, auslösbare Funktion zugeordnet ist, wobei zumindest eine auf das Kraftfahrzeug (K) und/oder die Bedieneinrichtung (1) wirkende Beschleunigung (a) erfasst und ein dem Bedienelement (20, 21) zugeordneter Erfassungsbereich (20', 21') in Abhängigkeit der erfassten Beschleunigung (a) in seiner Position relativ zur Bedieneinrichtung (1), in seiner Ausrichtung relativ zur Bedieneinrichtung (1), in seiner Form und/oder in seiner Größe verändert wird, wobei zusätzlich wenigstens ein Betätigungsparameter für den dem Bedienelement (20, 21) zugeordneten Erfassungsbereich (20', 21') zur Auslösung der wenigstens einen Funktion in Abhängigkeit der erfassten Beschleunigung (a) in seinem Wert verändert wird, **dadurch gekennzeichnet, dass** eine notwendige Verweildauer (tv) eines menschlichen Betätigungswerkzeuges auf dem dem Bedienelement (20, 21) zugeordneten Erfassungsbereich (20', 21') und/oder eine notwendige Betätigungskraft (F_{B}) eines menschlichen Betätigungswerkzeuges für den dem Bedienelement (20, 21) zugeordneten Erfassungsbereich (20', 21') zusätzlich in Abhängigkeit der Anzahl an virtuellen Bedienelementen (20) verändert werden.

2. Verfahren nach Anspruch 1, **dadurch gekennzeichnet, dass** als Betätigungsparameter eine notwendige Verweildauer (tv) eines menschlichen Betätigungswerkzeuges auf dem dem Bedienelement (20, 21) zugeordneten Erfassungsbereich (20', 21') angepasst wird.

3. Verfahren nach Anspruch 2, **dadurch gekennzeichnet, dass** die notwendige Verweildauer (t_{V}) mit einem steigenden Wert der erfassten Beschleunigung (a) verlängert wird.

4. Verfahren nach einem der vorhergehenden Ansprüche, **dadurch gekennzeichnet, dass** als Betätigungsparameter eine notwendige Betätigungskraft (F_{B}) eines menschlichen Betätigungswerkzeuges für den dem Bedienelement (20, 21) zugeordneten Erfassungsbereich (20', 21') angepasst wird.

5. Verfahren nach Anspruch 4, **dadurch gekennzeichnet, dass** die notwendige Betätigungskraft (F_{B}) mit einem steigenden Wert der erfassten Beschleunigung (a) vergrößert wird.

6. Verfahren nach einem der vorhergehenden Ansprüche, **dadurch gekennzeichnet, dass** die notwendige Verweildauer (tv) mit zunehmender Anzahl an virtuellen Bedienelementen (20) verlängert wird.

7. Verfahren nach einem der vorhergehenden Ansprüche, **dadurch gekennzeichnet, dass** die notwendige Betätigungskraft (F_{B}) mit zunehmender Anzahl an virtuellen Bedienelementen (20) vergrößert wird.

8. Verfahren nach einem der vorhergehenden Ansprüche, **dadurch gekennzeichnet, dass** bei Erreichen oder Überschreiten eines bestimmten Schwellenwertes (G2) der erfassten Beschleunigung (a) trotz einer ordnungsgemäßen Betätigung des Bedienelementes (20) keine Funktion ausgelöst wird.

9. Verfahren nach einem der vorhergehenden Ansprüche, **dadurch gekennzeichnet, dass** durch eine Vielzahl an virtuellen Bedienelementen (20) eine Bildschirmtastatur ausgebildet wird und bei Eingabe von alphanumerischen Zeichen mittels der Bedienelemente (20) vor einer Veränderung eines einem der Bedienelemente (20) zugeordneten Erfassungsbereichs (20') in seiner Position relativ zur Bedieneinrichtung (1), in seiner Ausrichtung relativ zur Bedieneinrichtung (1), in seiner Form und/oder in seiner Größe eine Wahrscheinlichkeit berücksichtigt wird, mit der ein Bedienelement (20, 21) als nächstes betätigt wird.

## Claims

1. Method for operating a contact-sensitive control device (1) of a motor vehicle (K), in which the control device (1) provides at least one virtual control element (20, 21) to which at least one specific, activatable function is assigned, at least one acceleration (a) acting on the motor vehicle (K) and/or the control device (1) is detected, and a detection region (20', 21') assigned to the control element (20, 21) is changed in its position relative to the control device (1), in its orientation relative to the control device (1), in its shape and/or in its size depending on the detected acceleration (a), and at least one actuation parameter for the detection region (20', 21') assigned to the control element (20, 21) for activating the at least one function is additionally changed in its value depending on the detected acceleration (a), **characterized in that** a necessary dwell time (t_{V}) of a human actuation tool on the detection region (20', 21') assigned to the control element (20, 21) and/or a necessary actuating force (F_{B}) of a human actuation tool for the detection region (20', 21') assigned to the control element (20, 21) are additionally changed depending on the number of virtual control elements (20).

2. Method according to claim 1, **characterized in that** a necessary dwell time (t_{V}) of a human actuation tool on the detection region (20', 21') assigned to the control element (20, 21) is adapted as an actuation parameter.

3. Method according to claim 2, **characterized in that** the necessary dwell time (t_{V}) is extended with an increasing value of the detected acceleration (a).

4. Method according to any of the preceding claims, **characterized in that** a necessary actuating force (F_{B}) of a human actuation tool for the detection region (20', 21') assigned to the control element (20, 21) is adapted as an actuation parameter.

5. Method according to claim 4, **characterized in that** the necessary actuating force (F_{B}) is increased with an increasing value of the detected acceleration (a).

6. Method according to any of the preceding claims, **characterized in that** the necessary dwell time (t_{V}) is extended with an increasing number of virtual control elements (20).

7. Method according to any of the preceding claims, **characterized in that** the necessary actuating force (F_{B}) is increased with an increasing number of virtual control elements (20).

8. Method according to any of the preceding claims, **characterized in that** when a certain threshold value (G2) of the detected acceleration (a) is reached or exceeded, no function is activated despite the correct actuation of the control element (20).

9. Method according to any of the preceding claims, **characterized in that** an on-screen keyboard is formed by a plurality of virtual control elements (20) and, when alphanumeric characters are input by means of the control elements (20), before a change of a detection region (20') assigned to one of the control elements (20) in its position relative to the control device (1), in its orientation relative to the control device (1), in its shape and/or in its size, a probability with which a control element (20, 21) is actuated next is taken into account.

## Revendications

1. Procédé pour faire fonctionner un dispositif de commande sensible au toucher (1) d'un véhicule automobile (K), dans lequel le dispositif de commande (1) fournit au moins un élément de commande virtuel (20, 21), auquel est attribuée au moins une fonction déterminée pouvant être déclenchée, dans lequel au moins une accélération (a) agissant sur le véhicule automobile (K) et/ou le dispositif de commande (1) est détectée et une zone de détection (20', 21') attribuée à l'élément de commande (20, 21) est modifiée, en fonction de l'accélération détectée (a) dans sa position par rapport au dispositif de commande (1), dans son orientation par rapport au dispositif de commande (1), dans sa forme et/ou dans sa taille, dans lequel en outre au moins un paramètre d'actionnement pour la zone de détection (20', 21') attribuée à l'élément de commande (20, 21) est modifié dans sa valeur pour déclencher l'au moins une fonction en fonction de l'accélération (a) détectée, **caractérisé en ce qu'**une durée de maintien nécessaire (t_{V}) d'un outil d'actionnement humain sur la zone de détection (20', 21') attribuée à l'élément de commande (20, 21) et/ou une force d'actionnement nécessaire (F_{B}) d'un outil d'actionnement humain pour la zone de détection (20', 21') attribuée à l'élément de commande (20, 21) sont modifiées en outre en fonction du nombre d'éléments de commande virtuels (20).

2. Procédé selon la revendication 1, **caractérisé en ce que**, en guise de paramètre de fonctionnement, une durée de maintien nécessaire (t_{V}) d'un outil d'actionnement humain sur la zone de détection (20', 21') attribuée à l'élément de commande (20, 21) est adaptée.

3. Procédé selon la revendication 2, **caractérisé en ce que** la durée de maintien nécessaire (t_{V}) est prolongée lorsque la valeur de l'accélération (a) détectée augmente.

4. Procédé selon l'une quelconque des revendications précédentes, **caractérisé en ce que**, en guise de paramètre de fonctionnement, une force d'actionnement nécessaire (F_{B}) d'un outil d'actionnement humain pour la zone de détection (20', 21') attribuée à l'élément de commande (20, 21) est adaptée.

5. Procédé selon la revendication 4, **caractérisé en ce que** la force d'actionnement nécessaire (F_{B}) est augmentée lorsque la valeur de l'accélération (a) détectée augmente.

6. Procédé selon l'une quelconque des revendications précédentes, **caractérisé en ce que** la durée de maintien nécessaire (t_{V}) est prolongée lorsque le nombre d'éléments de commande virtuels (20) augmente.

7. Procédé selon l'une quelconque des revendications précédentes, **caractérisé en ce que** la force d'actionnement nécessaire (F_{B}) est augmentée lorsque le nombre d'éléments de commande virtuels (20) augmente.

8. Procédé selon l'une quelconque des revendications précédentes, **caractérisé en ce que**, lorsqu'une valeur seuil déterminée (G2) de l'accélération (a) détectée est atteinte ou dépassée, malgré un actionnement convenable de l'élément de commande (20), aucune fonction n'est déclenchée.

9. Procédé selon l'une quelconque des revendications précédentes, **caractérisé en ce qu'**un clavier virtuel est formé par une pluralité d'éléments de commande virtuels (20) et lors de la saisie de caractères alphanumériques au moyen des éléments de commande (20) avant une modification d'une zone de détection (20') attribuée à un élément de commande (20) dans sa position par rapport au dispositif de commande (1), dans son orientation par rapport au dispositif de commande (1), dans sa forme et/ou dans sa taille, une probabilité qu'un élément de commande (20, 21) soit actionné ensuite est prise en compte.
